# EUROPEAN PATENT SPECIFICATION

(11) **EP 1 741 627 B1**
(45) Date of publication and mention of the grant of the patent: **24.09.2008**
(21) Application number: 05380148.6
(22) Date of filing: 04.07.2005
(51) Int. Cl.: B64D 17/34

(54) **Parachute steering system**
Fallschirmsteuerungssystem
Système de direction pour parachutes

(43) Date of publication of application: 10.01.2007
(73) Proprietor: Cimsa Ingenieria de Sistemas, S.A., 08520 Les Franqueses Del Valles Barcelona (ES)
(72) Inventor: Zapirain, José Francisco, 08520 Les Franqueses del Valles (ES)
(74) Representative: Capitan Garcia, Maria Nuria

(56) References cited:
- US-A- 5 080 305
- US-A1- 2001 004 097
- US-B1- 6 631 872

## Description

### OBJECT OF THE INVENTION

The present invention relates to parachute steering system which has been specially conceived for its installation in unmanned parachutes, that is, those intended for dropping guided loads.

The object of the invention is to provide a steering system with a robust structure, substantially simpler than the guidance systems existing up to now, and much more reliable in operation.

### BACKGROUND OF THE INVENTION

The current systems of parachute guidance usually employ radio-control or satellite localization (GPS) devices as the system header, as well as a number of electric actuators to pull on the control lines by winding the same onto their corresponding spool.

The problem with this type of system is that if a control line is wound over itself on the spool of the actuator, a problem automatically arises of the impossibility of releasing the control, which can cause loss of the load.

In addition, in said case, and even with recovery of the device, the preparation for the following drop is complicated by having to dismantle said spool.

In the state of the art, different parachute control systems are known, as the one disclosed in US 5080305, wherein is taught a low-altitude retro-rocket load landing system which uses only one fastening element and consequently no steering effect is produced in the parachute. Another parachute control system known in the state of the art is the one disclosed in US 6631872 wherein is disclosed a parachute trajectory control system provided with pay-out webbing controlled by the pay-out webbing pay-out reel upon the action of a disc brake, which implies some drawbacks due to its complexity which the present invention tries to overcome.

### DESCRIPTION OF THE INVENTION

The parachute steering system which the invention discloses resolves the problem outlined above in a fully satisfactory manner, by providing a mechanism which does not act on the length of the lines, but rather it displaces the center of gravity of the load with respect to the parachute, avoiding the use of the aforesaid spools and employing actuators of more reduced dimensions.

To this end, and in specific terms, the steering system which is disclosed is constituted on the basis of an upper platform, to which the parachute is fastened, and a lower platform, equipped with means for securing the load, so that both platforms are connected to each other by means of an articulated coupling, or of any type which allows the variation of their relative position.

Said articulated coupling permits that, by means of any kind of actuator system connected to both platforms and with a configuration significantly smaller than that of the conventional guidance devices, it is possible to control the relative angular position between the two platforms, both in their transversal and their longitudinal plane.

In this way, by means of the relative angular displacement between the platforms, with respect to an imaginary axis of rotation parallel to the trajectory of the load-parachute combination, it is possible to displace the center of gravity of said combination, toward one side or another, producing such asymmetries in the parachute that as a consequence a turn is produced in the trajectory of the same, it being possible to control the radius of curvature of said turn as a function of the relative inclination between the two platforms.

On the other hand, when carrying out a relative angular displacement between the upper platform and the lower platform with respect to an imaginary axis transversal to the forward trajectory of the parachute, the displacements of the center of gravity of the aforementioned combination cause displacements in the relative position of the parachute with respect to the load which signify an increase or decrease in the forward speed of the combination, in terms of said angular displacement being positive or negative.

It is pointed out that the transversal axis of rotation between the two platforms need not be centered, since an off-centered position of the same reduces the necessary force of the actuator to move the platforms.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows a view in front elevation of a parachute steering system implemented in accordance with the object of the present invention.
Figure 2. - It shows a view in front elevation of the steering system of the previous figure mounted in a parachute, and coupled to its corresponding load.
Figure 3. - It shows a similar view to that of the previous figure, in which one can observe how by means of the relative angular displacement between platforms with respect to a longitudinal tilting axis, it is possible to displace the center of gravity of the combination and to make the load turn.
Figure 4. - It shows a view in side elevation of the steering system of figure 1.
Figure 5. - It shows a similar view to that of figure 2, represented according to a side elevation.
Figures 6 and 7. - They show similar views to that represented in the previous figure, wherein one can observe how by means of the relative angular displacement between platforms with respect to an axis of transversal tilting, it is possible to reduce or increase the forward speed of the load.
Figure 8. - It shows, finally a view in front elevation of a second example of practical embodiment of the invention.

### PREFERRED EMBODIMENT OF THE INVENTION

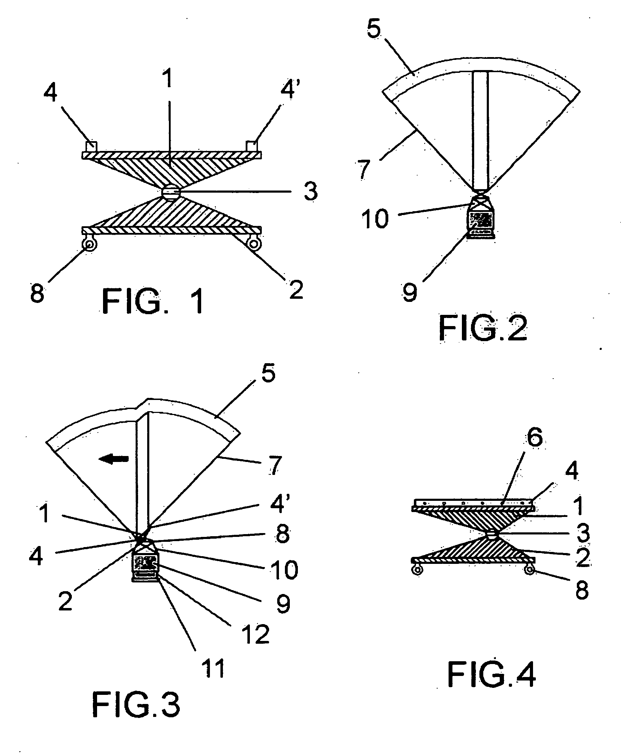

In the light of the aforesaid figures, and especially of figure 1, it can be observed how the parachute steering system which the invention discloses is incorporated based on an upper platform (1) and a lower platform (2) coupled in articulated fashion through any means of articulation (3), such as a hinge joint.

Both platforms (1) and (2) have a similar geometry which in this example of practical embodiment is materialized in a square-based pyramidal geometry, facing each other and joined in articulated fashion by one of their vertexes, but which could have any other geometry which facilitates the angular displacement between the same, without it affecting the essential nature of the invention.

The upper platform (1) incorporates means (4-4') for securing the parachute (5) to the same, which can be materialized in a pair of plates integral with said platform, arranged lengthwise, that is, in the forward direction of the load-parachute combination, on individual side edges of said platform, said plates (4-4') being provided with their corresponding orifices (6) for anchoring the parachute (5).

In addition, the lower platform (2) incorporates means (8) for the securing of the load (9), which can be materialized in lugs mounted on each of the vertexes of said platform (2), which allow, by means of retaining bands (10), the load (9) mounted on a platform (11) to be secured, said load being equipped with a damping element (12) which absorbs the energy of impact produced in the landing, all of which can be observed in figure 2.

The steering system will incorporate any kind of actuator system, not shown in the figures, so that by one end they are joined to one of the platforms and by the other end to the complementary one, allowing by means of the actuation of the actuators and due to the hinge element (3) the angular displacement of platform (1) with respect to platform (2), both in a transversal plane and a longitudinal plane.

As has been mentioned above, on varying the relative position between platforms (1) and (2), to a position in which they are not parallel, the center of gravity of the parachute-load combination is displaced, which causes the distribution of tensions in the lines (7) of the parachute (5) to be modified, it being possible to control said distribution of tensions through the cited actuator system to carry out turns, as well as to reduce or raise the speed of the combination.

More specifically, and as one can see in figures 2 and 3, while platforms (1) and (2) remain parallel to each other, the combination will advance in a straight line, so that if by means of the actuator system platform (1) is angularly displaced in the anti-clockwise direction with respect to platform (2), and in accordance with a longitudinal axis of rotation, said displacement produces a displacement of the center of gravity of the combination to the left, which is materialized in a greater distribution of tensions in the lines connected to plate (4) diminishing the tension in the lines fastened to plate (4'), which causes asymmetry in the parachute (5) which makes it change its trajectory to a curved trajectory, the radius of rotation of which will be determined by the relative inclination between the two platforms (1) and (2).

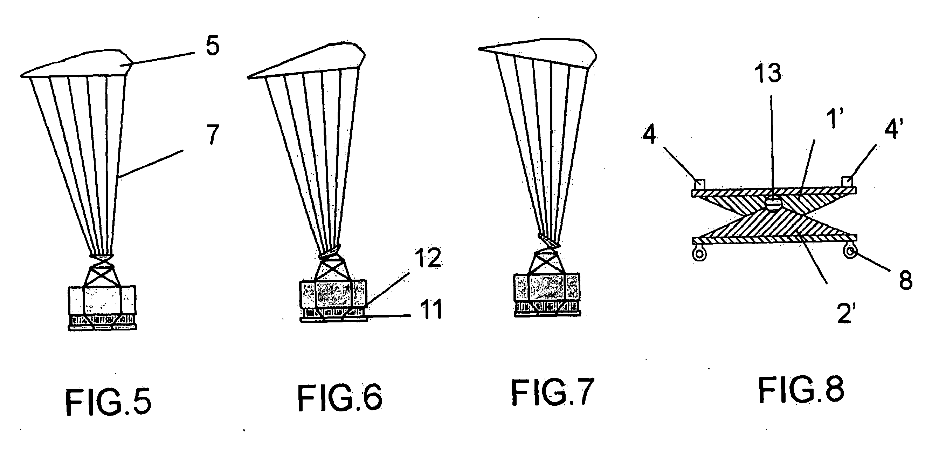

In addition, as one can observe in figures 5, 6 and 7, if the actuator system displaces platform (1) angularly in the anti-clockwise direction with respect to platform (2), and in accordance with a transversal axis of rotation, said displacement causes a displacement of the center of gravity of the combination backwards, which affects the distribution of the tensions in each of the lines fastened to plates (4-4'), which signifies a variation in the relative positioning between the parachute and the air stream impinging thereon, reducing the speed of the combination (figure 6), whilst if a displacement takes place in the clockwise direction between said platforms (1) and (2), the relative positioning between the parachute and the air stream impinging thereon favors a smaller aerodynamic resistance of the combination, raising the speed of the same (figure 7).

In figure 8 a second example of practical embodiment of the invention has been represented, in which a stering system guidan is shown, constituted by an upper platform (1') equipped with means (4-4') of fastening the parachute, and a lower platform (2') equipped with means (8) for securing the load. The platforms are joined to each other by means of any kind of articulation system (13), which allows the relative tilting with less force, due to the proximity of the line which joins (4) with (4') and the articulation element (13), thereby decreasing the necessary couple.

In addition, the steering system could be fitted with a single transversal axle, with its corresponding actuator system, which would allow only the speed of the combination to be controlled.

## Claims

1. Parachute steering system for parachutes used to carry out the dropping of loads in order to land them on a predetermined target, having an upper platform (1) equipped with means (4) for fastening the parachute (5) and being additionally provided with a lower platform (2) said platforms (1, 2) being in turn connected to each other in an articulated fashion by an actuator system, which allows angular displacement between the two platforms to be regulated, displacing the center of gravity of the load-parachute combination, **characterised in that** the lower platform (2) is equipped with means (8) for anchoring the cited load; and the upper platform (1) has more than one anchoring point (4-4') to which parachute lines (7) are connected, so when the upper platform (1) is angularly displaced relatively to the lower platform (2), both in a transversal plane and a longitudinal plane, the forces in the parachute lines (7) are relatively modified, steering the parachute (5) as consequence.

2. Parachute steering system according to claim 1, **characterized in that** the articulated coupling between the two platforms (1, 2) through an actuator system allows the variation of their relative position.

## Patentansprüche

1. Steuerungssystem für Fallschirme, das man zum Abwerfen von Ladungen verwendet, um diese auf einem vorbestimmten Ziel landen zu lassen, das eine obere Plattform (1) umfasst, die mit Mitteln (4) zur Befestigung des Fallschirms (5) ausgestattet ist, sowie eine untere Plattform (2), wobei die besagten Plattformen (1, 2) auf gelenkige Art und Weise über ein Betätigungssystem derart miteinander verbunden sind, dass die Regulierung einer Winkelverdrehung der beiden Plattformen gegeneinander möglich ist, um den Schwerpunkt der Kombination aus Ladung und Fallschirm zu verschieben, wobei die untere Plattform (2) mit Mitteln (8) zur Verankerung der besagten Ladung ausgestattet ist und die obere Plattform (1) mehr als einen Verankerungspunkt (4-4') zur Befestigung der Fallschirmleinen (7) besitzt, sodass sich bei einer Winkelverschiebung der oberen Plattform (1) relativ zur unteren Plattform (2) sowohl in einer Transversal- als auch in einer Längsebene die Kräfte in den Fallschirmleinen (7) relativ zueinander verändern, wodurch der Fallschirm (5) gesteuert wird.

2. Steuerungssystem für Fallschirme gemäß Anspruch 1, **dadurch** ausgezeichnet, dass die Gelenkkopplung zwischen den beiden Plattformen (1, 2) über ein Betätigungssystem die Veränderung ihrer Position relativ zueinander gestattet.

## Revendications

1. Système de direction de parachute pour des parachutes utilisés pour réaliser le lancement de charges afin de les faire atterrir sur une cible prédéterminée, ayant une plate-forme supérieure (1) équipée de moyens (4) pour fixer le parachute (5) et étant en outre pourvu d'une plate-forme inférieure (2), lesdites plate-formes (1, 2) étant à leur tour connectées l'une à l'autre d'une manière articulée par un système actionneur, qui permet que le déplacement angulaire entre les deux plates-formes soit régulé en déplaçant le centre de gravité de la combinaison de charge-parachute, **caractérisé en ce que** la plate-forme inférieure (2) est équipée de moyens (8) pour amarrer ladite charge ; et la plate-forme supérieure (1) a plus d'un point d'amarrage (4-4') auxquels sont connectées les cordes du parachute (7), de manière que lorsque la plate-forme supérieure (1) est déplacée angulairement par rapport à la plate-forme inférieure (2), aussi bien dans un plan transversal que dans un plan longitudinal, les forces dans les cordes de parachute (7) sont relativement modifiées, en dirigeant par conséquent le parachute (5).

2. Système de direction de parachute selon la revendication 1, **caractérisé en ce que** l'accouplement articulé entre les deux plates-formes (1, 2) au moyen d'un système actionneur permet la variation de leur position relative.
